# EUROPÄISCHE PATENTANMELDUNG

(11) **EP 1 010 605 A2**
(43) Veröffentlichungstag der Anmeldung: **21.06.2000**
(21) Anmeldenummer: 99121323.2
(22) Anmeldetag: 26.10.1999
(51) Int. Cl.: B62D 25/08

(54) **Vorbaustruktur für eine selbsttragende Rohbaukarosserie eines Personenkraftwagens**

(30) Priorität: 17.12.1998 DE 19858303
(71) Anmelder: DaimlerChrysler AG, 70567 Stuttgart (DE)
(72) Erfinder: Gure, Dietmar, 71120 Grafenau (DE); Lange, Dieter, 71106 Magstadt (DE)

(57) **Zusammenfassung**

Mit eine Vorbaustruktur für eine selbsttragende Rohbaukarosserie eines Personenkraftwagens mit zwei Vorbaulängsträgern, ist ein Funktionsträger (8) an wenigstens vier Befestigungspunkten kraftübertragend verbunden ist, wobei der Funktionsträger aus zwei Querträgerabschnitten und zwei Längsträgerabschnitten aufgebaut ist.

Die Funktionsträger (8) ist als einstückiges Gußbauteil gestaltet, die Querträgerabschnitte und die Längsträgerabschnitte sind mit einem - im montierten Zustand - nach unten offenen, U-artigen Schalenprofil versehen, und jeder Längsträgerabschnitt (9) ist mit wenigstens einem geometrisch bedingten Solldeformationsbereich (10) versehen, der bei einer Deformation der Vorbaulängsträger (3) in Fahrzeuglängsrichtung zusätzlich plastisch deformierbar ist.

Einsatz für Personenkraftwagen.

## Beschreibung

Die Erfindung betrifft eine Vorbaustruktur für eine selbsttragende Rohbaukarosserie eines Personenkraftwagens mit zwei Vorbaulängsträgern, mit denen ein Funktionsträger an wenigstens vier Befestigungspunkten kraftübertragend verbunden ist, wobei der Funktionsträger aus zwei Querträgerabschnitten und zwei Längsträgerabschnitten aufgebaut ist.

Eine solche Vorbaustruktur ist für Mercedes-Benz-Personenkraftwagen allgemein bekannt. Die Vorbaustruktur weist zwei Vorbaulängsträger auf, an deren Unterseite mit Hilfe von jeweils zwei in Fahrzeuglängsrichtung zueinander beabstandeten Befestigungspunkten ein als Funkionsträger dienender Integralträger festgelegt ist. Der Integralträger trägt ein Antriebsaggregat sowie andere Fahrzeugfunktionseinheiten. Bei einem Frontalaufprall eines mit einem solchen Integralträger versehenen Personenkraftwagens kann es zu einer Blockbildung kommen, die die Energieaufnahmefähigkeit der Vorbaustruktur reduziert.

Um dies zu vermeiden, ist es auch bereits bekannt, die zwei - in normaler Fahrtrichtung gesehen - hinteren Befestigungspunkte des Integralträgers an den Vorbaulängsträgern abscherbar zu gestalten, so daß der Integralträger bei einem entsprechenden Frontalaufprall an diesen Befestigungspunkten von der Vorbaustruktur getrennt wird und somit keine Blockbildung mehr verursachen kann.

Aufgabe der Erfindung ist es, eine Vorbaustruktur der eingangs genannten Art zu schaffen, die eine gegenüber dem Stand der Technik weiter verbesserte Energieaufnahme bei einem Fahrzeugaufprall ermöglicht.

Diese Aufgabe wird dadurch gelöst, daß der Funktionsträger als einstückiges, wenigstens abschnittsweise deformierbares Bauteil gestaltet ist, wobei jeder Längsträgerabschnitt mit wenigstens einem geometrisch bedingten Solldeformationsbereich versehen ist, der bei einer Deformation der Vorbaulängsträger in Fahrzeuglängsrichtung plastisch deformierbar ist. Dadurch wird vorteilhaft gewährleistet, daß zusätzlich zu den Vorbaulängsträgern auch der Funktionsträger noch zur Energieabsorption bei einem entsprechenden Fahrzeugaufprall herangezogen wird. Der Funktionsträger kann insbesondere als Fahrschemel oder als Integralträger gestaltet sein und somit ein Fahrwerk, ein Antriebsaggregat und/ oder Vorderachsteile tragen. Dabei genügt es erfindungsgemäß, wenn der Funktionsträger bei einer entsprechenden Vorbaudeformation lediglich über einen Teil des Deformationsweges zur ergänzenden Energieabsorption beiträgt und anschließend bricht, da aufgrund der vorhandenen Deformation am Funktionsträger der aufgetretene Bruch eindeutig auf diese Deformation zurückführbar ist, so daß sich bezüglich Produkthaftungsgründen keine Schwierigkeiten bei der Ursachenforschung ergeben. Die durch die zusätzliche Energieabsorption des Funktionsträgers insgesamt erhöhte Energieabsorbierbarkeit der Vorbaustruktur führt im Bereich einer Fahrgastzelle der Rohbaukarosserie zu einer reduzierten Fußraumintrusion. Vorzugsweise ist der Funktionsträger im Längsträger-Bereich mit einer Z-förmig vertikal versetzten Abwinklung versehen, die den geometrisch bedingten Solldeformationsbereich darstellt. Der geometrisch bedingte Solldeformationsbereich zwingt auch einen Funktionsträger aus nicht duktilem Material unter Längskrafteinfluß zu einer Verformung und damit zur Energieabsorption.

In Ausgestaltung der Erfindung ist das Bauteil als Gußbauteil aus einem Metallwerkstoff hergestellt, der eine so hohe Duktilität aufweist, daß bei entsprechenden Vorbaubelastungen plastische Deformationen des Gußbauteiles in den Solldeformationsbereichen entstehen, bevor es zu einem Materialbruch kommt. Diese Ausgestaltung ist aus Produkthaftungsgründen vorteilhaft, wie oben bereits ausgeführt wurde.

In weiterer Ausgestaltung der Erfindung ist als Solldeformationsbereich jeder Längsträgerabschnitt mit einem Z-förmig vertikal versetzten Abwinklungsbereich versehen. Dies ist eine besonders vorteilhafte Ausgestaltung, um gezielte Deformationen des Funktionsträgers zu erzielen. Die Deformierbarkeit entsteht durch die geometrische Gestaltung, die eine Faltung oder Stauchung der Längsträgerabschnitte bei entsprechenden Deformationen bewirkt.

In weiterer Ausgestaltung der Erfindung ist der Funktionsträger von einer Unterseite her mit den Vorbaulängsträgern verschraubt, wobei die Seitenträgerabschnitte unterhalb der Vorbaulängsträger positioniert sind.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in einer Seitenansicht eine Ausführungsform einer erfindungsgemäßen Vorbaustruktur mit einem anzubindenden Funktionsträger, und
- Fig. 2: in vergrößerter, perspektivischer Darstellung den Funktionsträger nach Fig. 1.

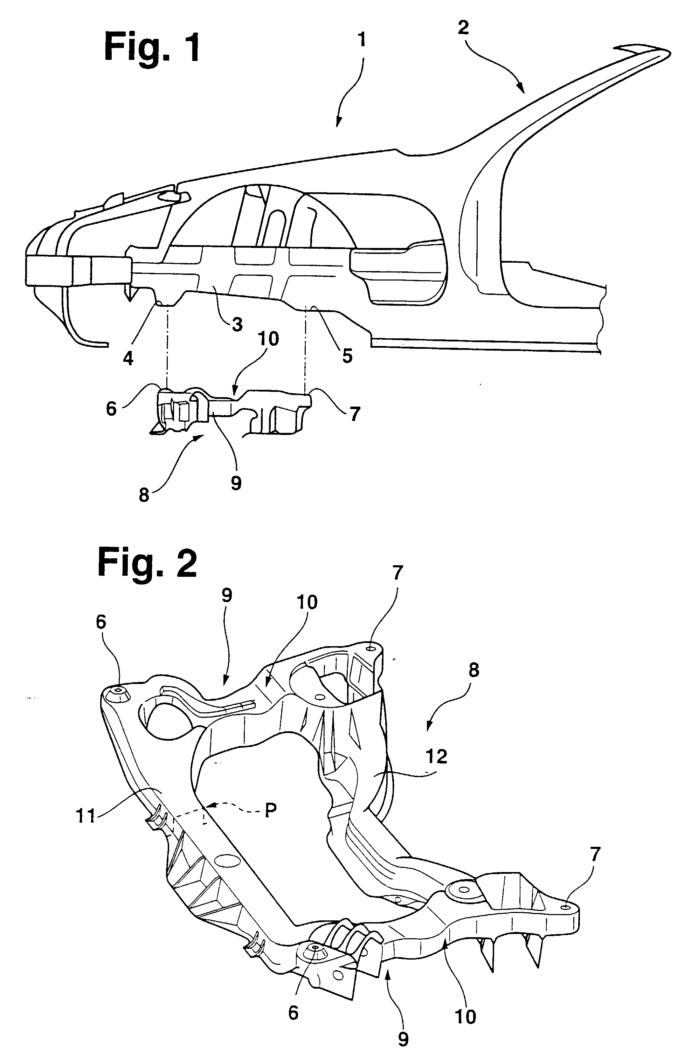

Ein Personenkraftwagen weist eine selbsttragende Rohbaukarosserie auf, die gemäß Fig. 1 mit einer Vorbaustruktur 1 versehen ist. An die Vorbaustruktur 1 schließt - in normaler Fahrtrichtung gesehen - nach hinten eine Fahrgastzelle 2 an. Der Personenkraftwagen kann offen oder geschlossen gestaltet sein. Die Vorbaustruktur 1 weist zwei in Fahrzeuglängsrichtung erstreckte Vorbaulängsträger 3 auf, die jeweils an ihren Unterseiten mit zwei in Fahrzeuglängsrichtung zueinander beabstandeten Aufnahmebereichen 4, 5 für die Festlegung eines Funktionsträgers 8 versehen sind.

Der Funktionsträger 8 ist beim dargestellten Ausführungsbeispiel sowohl zur Aufnahme eines Antriebsaggregates als auch zur Aufnahme von Fahrwerkfunktionseinheiten ausgestaltet. Er bildet somit zum einen einen Integralträger und zum anderen einen Fahrschemel. Bei nicht dargestellten Ausführungsbeispielen der Erfindung kann der Funktionsträger 8 jedoch auch für die Aufnahme von lediglich einer einzelnen, entsprechenden Fahrzeugfunktionseinheit oder für die Aufnahme mehrerer, anders gestalteter Fahrzeugfunktionseinheiten ausgestaltet sein.

Der Funktionsträger 8 ist als einstückiges Metallgußbauteil gestaltet und weist einen vorderen Querträgerabschnitt 11, zwei an den vorderen Querträgerabschnitt 11 anschließende Schenkelabschnitte in Form von seitlichen Längsträgerabschnitten 9 sowie einen weiteren, die Längsträgerabschnitte 9 rückseitig miteinander verbindenden hinteren Querträgerabschnitt 12 auf. Sowohl die beiden Querträgerabschnitte 11, 12 als auch die Längsträgerabschnitte 9 sind als zu einer Seite - im montierten Zustand zu einer Unterseite - offenes Schalenprofil P (gestrichelte Darstellung in Fig. 2) gestaltet, wobei die Schalenprofile etwa U-förmig gestaltet sind. An vorderen und hinteren Eckpunkten des Funktionsträgers 8 sind jeweils zwei vordere Befestigungspunkte 6 und zwei hintere Befestigungspunkte 7 vorgesehen, die exakt auf die Lage der Aufnahmebereiche 4, 5 an den Unterseiten der Vorbaulängsträger 3 abgestimmt sind. Mittels dieser Befestigungspunkte 5, 7 ist der Funktionsträger 8 gemäß dem strichpunktierten Linienverlauf in Fig. 1 von unten her an den Vorbaulängsträger 3 kraftübertragend anbindbar. Zur kraftübertragenden Festlegung des Funktionsträgers 8 an die beiden Vorbaulängsträger 3 sind stabile Verschraubungen vorgesehen.

Der Gußwerkstoff des einstückigen Funktionsträgers 8 ist mit einer derartigen Duktilität und Zähigkeit versehen, daß er wenigstens in gewissen Grenzen plastisch deformierbar ist. Die plastische Deformierbarkeit des Funktionsträgers 8 muß so groß gewählt sein, daß auf Höhe von Solldeformationsbereichen 10 der Längsträgerabschnitte 9 bei einer Deformation der Vorbaulängsträger 3 wenigstens über einen Teil des Defomationsweges eine ergänzende plastische Deformation des Funktionsträgers 8 im Bereich der Längsträgerabschnitte 9 erfolgt, bevor die Längsträgerabschnitte 9 durch Bruch versagen. Die beiden Solldeformationsbereiche 10 der Längsträgerabschnitte 9 sind beim dargestellten Ausführungsbeispiel als Z-förmig vertikal versetzte Abwinklungsbereiche vorgesehen. Dabei befinden sich die Längsträgerabschnitte 9 nahezu exakt unterhalb der Vorbaulängsträger 3. Bei einer Deformation der Vorbaulängsträger 3 wird somit aufgrund der Kraftübertragung über die Befestigungspunkte 6 auf die Längsträgerabschnitte 9 eine Z-artige Stauchung oder Faltung der Längsträgerabschnitte 9 erfolgen, bevor diese durch Bruch versagen. Selbstverständlich kann der Funktionsträger 8 auch noch in seinen übrigen Bereichen plastisch deformierbar gestaltet sein.

Bei einem nicht dargestellten Ausführungsbeispiel der Erfindung ist der Funktionsträger als Aufnahmeträger für ein Frontantriebsaggregat gestaltet. Bei diesem Ausführungsbeispiel sind die seitlichen Längsträgerabschnitte derart zu den Unterseiten der Vorbaulängsträger beabstandet, daß sich zwischen den Vorbaulängsträgern und den zugeordneten Längsträgerabschnitten des Funktionsträgers ein ausreichender Zwischenraum ergibt, der die Hindurchführung von jeweils einer vorderen Gelenkwelle des Frontantriebsaggregates für die Aufnahme der Radnaben gewährleistet.

## Patentansprüche

1. Vorbaustruktur für eine selbsttragende Rohbaukarosserie eines Personenkraftwagens mit zwei Vorbaulängsträgern, mit denen ein Funktionsträger an wenigstens vier Befestigungspunkten kraftübertragend verbunden ist, wobei der Funktionsträger aus zwei Querträgerabschnitten und zwei Längsträgerabschnitten aufgebaut ist,
**dadurch gekennzeichnet,**
daß der Funktionsträger (8) als einstückiges, wenigstens abschnittsweise deformierbares Bauteil gestaltet ist, wobei jeder Längsträgerabschnitt (9) mit wenigstens einem geometrisch bedingten Solldeformationsbereich (10) versehen ist, der bei einer Deformation der Vorbaulängsträger (3) in Fahrzeuglängsrichtung plastisch deformierbar ist.

2. Vorbaustruktur nach Anspruch 1,
**dadurch gekennzeichnet,**
daß die Querträgerabschnitte (12) und die Längsträgerabschnitte (9) mit einem - im montierten Zustand - nach unten offenen, U-artigen Schalenprofil (P) versehen sind.

3. Vorbaustruktur nach Anspruch 1 oder 2,
**dadurch gekennzeichnet,**
daß das Bauteil als Gußbauteil aus einem Metallwerkstoff hergestellt ist, der eine so hohe Duktilität aufweist, daß bei entsprechenden Vorbaubelastungen plastische Deformationen des Gußbauteiles in den Solldeformationsbereichen (10) entstehen, bevor es zu einem Materialbruch kommt.

4. Vorbaustruktur nach Anspruch 3,
**dadurch gekennzeichnet,**
daß als Solldeformationsbereich (10) jeder Längsträgerabschnitt (9) mit einem Z-förmig vertikal versetzten Abwinklungsbereich versehen ist.

5. Vorbaustruktur nach einem der vorhergehenden Ansprüche,
**dadurch gekennzeichnet,**
daß der Funktionsträger (8) von einer Unterseite her mit den Vorbaulängsträgern (3) verschraubt ist, wobei die seitlichen Längsträgerabschnitte (9) unterhalb der Vorbaulängsträger (3) positioniert sind.
